# EUROPÄISCHE PATENTSCHRIFT

(11) **EP 1 346 647 B1**
(45) Veröffentlichungstag und Bekanntmachung des Hinweises auf die Patenterteilung: **24.05.2006**
(21) Anmeldenummer: 03450067.8
(22) Anmeldetag: 14.03.2003
(51) Int. Cl.: A23K 1/16, A23K 1/18, A01K 61/00

(54) **Fischfutter zur Aufzucht von Lachsfischen**
Fish feed for salmonids
Nourriture pour poissons destinée à l'élevage de salmonidés

(30) Priorität: 22.03.2002 AT 4492002
(43) Veröffentlichungstag der Anmeldung: 24.09.2003
(73) Patentinhaber: Brauchl, Peter, A-2500 Soo (AT)
(72) Erfinder: Brauchl, Peter, A-2500 Soo (AT)
(74) Vertreter: Müllner, Erwin

(56) Entgegenhaltungen:
- WO-A-00/49889
- WO-A-01/84949
- IT-B- 1 244 375
- US-A- 5 346 713
- S.C. KESTIN & P.D. WARRISS: "Farmed fish quality" 2001 , BLACKWELL SCIENCE LTD. , OXFORD, UK XP002246047 G. ROSENLUND et al.: "Effect of dietary fatty acid profile on fatty acid composition in salmon (Salmo salar) when replacing fish oils with vegetable oils" * Seite 403, Absatz 1 - Seite 404, Absatz 1 *
- G. ROSENLUND ET AL.: "Effect of alternative lipid sources on long-term growth performance and quality of Atlantic salmon (Salmo salar L.)" AQUACULTURE RESEARCH, Bd. 32, Nr. S1, 2001, Seiten 323-328, XP002245606 BLACKWELL SCIENCE, OXFORD,, GB ISSN: 1355-557X
- D.R. TOCHER ET AL.: "Hepatocyte fatty acid desaturation and polyunsaturated fatty acid composition of liver in salmonids: effects of dietary vegetable oil" COMPARATIVE BIOCHEMISTRY AND PHYSIOLOGY. B. BIOCHEMISTRY & MOLECULAR BIOLOGY, Bd. 130, Nr. 2, 2001, Seiten 257-270, XP002245607
- DATABASE WPI Section Ch, Week 199433 Derwent Publications Ltd., London, GB; Class D13, AN 1994-268641 XP002245608 -& JP 06 197706 A (NISSHIN OIL MILLS LTD), 19. Juli 1994 (1994-07-19)

## Beschreibung

Die Erfindung betrifft ein Verfahren zur Aufzucht von insbesondere von Wondersaiblingen oder Seesaiblingen. Lachsfischen als Speisefisch in Teichen od. dgl. im Binnenland.

Lachsfische, insbesondere solche aus kalten Regionen wie z.B. aus dem Eismeer, haben eine Muskel- und Fleischstruktur, welche sich von gezüchteten Lachsfischen unterscheidet. So finden sich im Fleisch des wilden atlantischen Lachses langkettige, mehrfach ungesättigte Fettsäuren, die für die Gesundheit des Menschen sehr wertvoll und lebenswichtig sind. Sogenannte Omega Fettsäuren verfügen über ein spezielles Wirkungsspektrum, das sich aus der Position der ersten Doppelbindung, der Länge der Fettsäurekette und der Anzahl aller Doppelbindungen ergibt. Die bekanntesten Fettsäuren haben eine Kettenlänge von C18, wie etwa C18:3 die Linolensäure im Leinöl. Leider verliert der im Binnenland gezüchtete Lachs die Eigenschaft, solche wertvollen Fettsäuren, insbesondere die Docosahexaensäure C22:6, in bedeutendem Ausmaß zu bilden. Süßwasserlachsfische haben nur geringe (z.B. Bachsaiblinge, Forellen) oder keine der in Rede stehenden Fettsäuren.

**[0003]** In S.C.Kestin & P.D. WARRISS: "Farmed fisch quality" 2001, BLACKWELL SCIENCE LTD., OXFORD, UK wird über eine Studie über die Wirkung von Fischfutter auf die Fettsäuren im Fischfleischberichtet. Demnach gibt es einen engen Zusammenhang zwischen dem Verhältnis von n-6 und n-3-Fettsäuren im Futter und eben diesem Verhältnis im Fischfleisch. Es wird noch spekuliert, dass möglicherweise die C22:6-Fettsäure aus dem Futter in das Fischfleisch eingebaut wird oder dass diese aus C18:3-Fettsäure gebildet wird. Aus der WO 01084949 A, insbesondere der Tabelle 8, Spalte "URC", ist ein Fischfutter bekannt, das zufällig die Werte erfüllt, die im Anspruch 1 vorgesehen sind.

Die Erfindung zielt darauf ab, ein Verfahren anzugeben, mit dem es möglich ist, Lachsfische, allenfalls Wandersaiblinge oder auch Seesaiblinge so zu züchten, dass sich auch in Aquakulturanlagen im Binnenland Fische mit ernährungsphysiologisch besonders wertvollen Anteilen an Fettsäuren, so wie das in der freien Natur der Eismeere der Fall ist, entwickeln.

Dies wird durch die Merkmale von Anspruch 1 erreicht, Es kommt bei der Lachszucht mit dem oben genannten Ziel nicht darauf an, dem Fischfutter möglichst viel Leinöl (Pflanzenöl) zuzusetzen, sondern es muss für die in jeder Altersstufe optimale Entwicklung des Lachsfisches erfindungsgemäß das Verhältnis der zweifach ungesättigten Fettsäuren zu den dreifach ungesättigten Fettsäuren beachtet und auf das genannte Maß eingestellt werden. Auch der Mensch nimmt aus der Nahrung für ihn wertvolle Stoffe nur in Relation zu anderen darin enthaltenen Stoffen auf und nur wenn die Relation stimmt, können sich die positiven Wirkungen entfalten.

Das erfindungsgemäß verwendete Fischfutter kommt mit viel weniger Pflanzenölen wie Leinöl aus. Damit wird ein Kostenvorteil erreicht, da Leinöl der weitaus teuerste Bestandteil des Fischfutters ist. Besonders vorteilhaft ist dieses Fischfutter, da es im Gegensatz zu sehr fettem Futter zu keiner Wasserbeeinträchtigung führt und außerdem fettes Fischfutter weitaus weniger haltbar (lagerfähig) ist, als das erfindungsgemäß verwendete Fischfutter. Insbesondere die wertvollen kaltgepressten Pflanzenöle (Saatöle) sind bei Wärme, Licht und Sauerstoffeinfluss rasch verderblich.

Daher werden die Pflanzenöle erst vor dem Verfüttern zugesetzt. Die geringen Pflanzenölmengen gewährleisten weiterhin die Rieselfreudigkeit bei der Ausbringung des Fischfutters. Da das Fischfutter erst kurz vor dem Verfüttern fertiggestellt wird, verdirbt es nicht und wird von den Fischen sehr gut angenommen. Das Fischfutter soil großflächig über die Oberfläche des Teiches od. dgl. verteilt werden. Zur Futterverteilung können beispielsweise Schleuderscheiben oder Druckluftsysteme zum Ausblasen des Fischfutters über große Flächen verwendet werden. Insbesondere ist es zweckmäßig, wenn das Fischfutter in mindestens 10, vorzugsweise 60 Zyklen über den Tag verteilt, verabreicht wird. Dadurch werden die Lachse wegen der permanenten Nahrungssuche stets in Bewegung gehalten. Dies hat sich als zweckmäßig erwiesen, weil die gewünschten Fettsäuren C22:6 (C22:n3) in erhöhter Konzentration im Muskelbereich (Schulterbereich) des Lachsfisches vorkommen.

Das noch unveredelte Fischfutter kann als Industrieprodukt trocken gelagert werden und erhält den veredelnden Zusatz an Pflanzenöl, insbesondere aus biologischem Landbau, im angegebenen Verhältnis kurz vor dem Verfüttern. Das trockene Fischfutter nimmt das Pflanzenöl (z.B. Leinöl mit C18:3 Fettsäureanteilen) auf. Mit diesem angereicherten Fischfutter ist auch der in Teichen gezüchtete Lachs in der Lage, die vorgenannten Fettsäuren, insbesondere C22:6, in seinem Fleisch auszubilden.

Ein weiteres Kriterium, das zur Erhöhung des gewünschten Fettsäureanteils führt, liegt darin, dass der Teich mit Frischwasser gespeist und das Wasser vom Grund des Teiches insbesondere der tiefsten Stelle des Teiches einschließlich des anfallenden Kots der Fische abgeführt wird. Damit bleibt das Wasser im Vergleich zu einem bloß durchflossenen Fischteich besonders sauber.

Ein Beispiel für ein Fischfutter und für ein Verfahren zur Ausbringung des Fischfutters wird nachfolgend beschrieben.

Ein Fischteich im Binnenland bedeckt eine Fläche von 500 m² und wird von einem Gerinne, Quelle oder Brunnen permanent gespeist, das eine Wassermenge von 10 l/sec zuführt, welche in gleicher Menge über ein z.B. auf den Wasserspiegel des Teiches vom Boden hochgezogenes Rohrsystem von der tiefsten Stelle des Teiches über einen Gitterschacht entnommen wird. Damit ist sichergestellt, dass der etwa 5 m tiefe Teich klares Wasser enthält und dass ferner Fäkalien wie Fischkot abgeführt werden. Der Fischbestand wurde aus Jungfischen unmittelbar gezüchtet. Eine Auffrischung des Bestandes kann durch Aussetzen von wilden Lachsfischen, z.B. alle 2 Jahre, erfolgen, ist jedoch nicht zwingend erforderlich.

Aus einem Vorratsbunker mit relativ trockenem lagerfähigen Fischfutter in Pelletsform, das für 100 kg aus 35 kg Fischmehl (nicht aus kontaminierten Ostsee-Heringen), 26 kg Weizen, 19,5 kg Sojaschrot, 13 kg Fischöl, 5 kg Sonnenblumenschrot und 1,5 kg an biologischen Beimischungen besteht, wird die Menge von 100 kg dieses langfristig lagerfähigen Fischfutters entnommen. Der Rohfettanteil liegt beispielsweise bei 16%. Eine zusätzliche Fettaufnahme ist bei obiger Zusammensetzung noch möglich. Dieses industriell gefertigte Halbprodukt wird vor der Verfütterung in einem Mischer durch Zugabe von hochwertigen Pflanzenölen aus biologischer Landwirtschaft soweit veredelt, bis ein Fettsäureverhältnis C18:2 zu C18:3 zwischen 2:1 und 5:1 erreicht ist. Dazu kann für die Menge von 100 kg Fischfutter (Halbprodukt) an hochwertigen Pflanzenölen etwa 0,8 kg Leinöl und 1,2 kg Rapsöl zugesetzt werden. Im Beispiel ergibt sich dadurch ein Fettsäureverhältnis von C18:2 zu C18:3 von etwa 4:1 (also unter 5:1). Das so veredelte Fischfutter reicht für zwei Wochen und ist auch ohne weiteres für diesen Zeitraum haltbar.

Ein Tagesbedarf an fertigem Fischfutter von 6 kg wird in 60 gleiche Teile geteilt (also jeweils 100 g) und zwischen 6 Uhr morgens und 18 Uhr abends jeweils im Abstand von etwa 12 Minuten über die gesamte Fläche des Teiches durch ein Schleudergerät verteilt. Die Pellets sind schwimmfähig. Damit sind die Fische gezwungen, der Nahrung während des ganzen Tages nachzujagen. Sie werden im gesamten Teich unentwegt in Bewegung gehalten. Dadurch bilden die Lachse Muskelfleisch aus, das nachweislich das Zentrum der Anreicherung der vom Lachs in C22:6 umgesetzten Fettsäuren der Nahrung ist. Dies wurde durch gaschromatographische Untersuchungen festgestellt. Mit dem üblichen Fischfutter ohne der genannten Pflanzenölbeigabe ist dieser Stoffwechselprozess von den mehrfach ungesättigten Fettsäuren C18:2 und C18:3 zu C22:6 nicht oder nur in kleinen Grenzen möglich. Wollte man die dünnhäutigen Lachsfische aus der freien Natur der kalten Regionen, insbesondere aus dem Eismeer, in das Milieu üblicher Süßwasserteiche im Binnenland übertragen, dann wäre ein Überleben in der sich zunehmend verschlechternden Wasserqualität nur für kurze Zeit möglich. Mit dem Fischfutter und dem Verfahren gemäß der Erfindung ist es gelungen, Lachsfische so zu züchten, dass diese hinsichtlich des Fettsäureanteils der mehrfach ungesättigten Fettsäuren wie insbesondere C22:6 den Wildlachsen entsprechen oder diese übertreffen. Besonders gute Ergebnisse erreicht man im kalten Wasser, das eine Temperatur von 15°C nicht übersteigt. Somit sind Züchtungen in Teichen, die von einem Gebirgsbach gespeist werden, besonders erfolgversprechend. Es können im oben beschriebenen Beispiel mit den genannten Parametern jährlich etwa 2 t Lachs gezogen werden. Erfolge hinsichtlich des bei Lachsen angestrebten Ziels lassen sich auch mit Saiblingen erreichen.

## Patentansprüche

1. Verfahren zur Aufzucht von Lachsfischen, insbesondere von Wandersaiblingen oder Seesaiblingen, als Speisefisch in Teichen od. dgl. im Binnenland, mit dem ein Fischfleisch, das einen hohen Anteil mehrfach ungesättigter Fettsäuren, insbesondere von Docosahexaensäure C22:n3, aufweist, gebildet wird, auf der Basis von industriell vorgefertigtem Fischfutter mit geringem Fettanteil, welches Fischfutter üblicherweise Fischmehl, Sojaextraktionsschrot, Weizen, Fischöl, Sonnenblumenextraktionsschrot oder dergleichen enthält und Pflanzenöle wie beispielsweise Leinöl und Rapsöl umfasst, wobei in dem industriell vorgefertigten Fischfutter, das einen hohen Anteil von Fettsäuren C18:2 und einen geringen Anteil von Fettsäuren C18:3 aufweist, die Pflanzenöle in einem Ausmaß enthalten sind, dass ein Verhältnis der Anteile der Fettsäuren C18:2 zu den Fettsäuren C18:3 zwischen 2:1 bis maximal 5:1, vorzugsweise von etwa 3:1, vorliegt, wobei die Pflanzenöle erst vor dem Verfüttern zugesetzt werden und das Fischfutter großflächig über die Oberfläche des Teiches od. dgl. verteilt wird.

2. Verfahren nach Anspruch 1, **dadurch gekennzeichnet, dass** das Fischfutter in mindestens 10, vorzugsweise 60 Zyklen über einen Tag aufgeteilt, verabreicht wird.

3. Verfahren nach Anspruch 1 oder 2, **dadurch gekennzeichnet, dass** das Fischfutter in Form schwimmfähiger Pellets verabreicht wird.

## Claims

1. Method for breeding salmonids, in particular charr or sea trout, as edible fish in inland ponds or the like, by which fish flesh which has a high content of polyunsaturated fatty acids, in particular docosahexaenoic acid C22:n3, is formed based on low-fat industrial pre-mix of fish feed which conventionally contains fish meal, soya extract (coarse meal), wheat, fish oil, sunflower extract (coarse meal) or the like and comprises vegetable oils, for example linseed and rapeseed oil, wherein the vegetable oils contained in the industrial pre-mix of fish feed, which has a high fatty acid C18:2 content and a low fatty acid C18:3 content, are in a quantity such that the ratio of fatty acids C18:2 to fatty acids C18:3 is from 2:1 to at most 5:1, preferably approximately 3:1, the vegetable oils being added just before feeding and the fish feed being scattered over a large area of the surface of the pond or the like.

2. Method according to claim 1, **characterised in that** the fish are fed in at least 10 cycles, preferably in 60 cycles at intervals over a day.

3. Method according to either claim 1 or claim 2, **characterised in that** the fish feed is provided in the form of floatable pellets.

## Revendications

1. Procédé d'élevage de salmonidés, en particulier d'ombles chevaliers ou d'ombles de l'arctique, comme poissons de table, dans des étangs ou similaires du marché intérieur, permettant la formation d'une chair de poisson qui présente une proportion élevée d'acides gras polyinsaturés, en particulier d'acide docosahexaènoïque en C22:n3, à partir de nourriture pour poissons préparée au préalable industriellement ayant une faible proportion de graisse, laquelle nourriture pour poisson contient usuellement de la farine de poisson, du malt d'extraction de soja, du blé, de l'huile de poisson, du malt d'extraction de tournesol et similaire et comprend des huiles végétales, comme par exemple de l'huile de lin et de l'huile de ricin, dans cette nourriture pour poissons préparée au préalable industriellement, qui présente une proportion élevée d'acides gras en C18:2 et une faible proportion d'acides gras en C18:3, les huiles végétales sont contenues en une mesure telle qu'un rapport de proportions acides gras C18:2/acides gras C18:3 se situe entre 2/1 et au maximum 5/1, de préférence à environ 3/1, les huiles végétales étant additionnées seulement avant de nourrir les poissons et la nourriture pour poissons étant répartie sur de grandes superficies à la surface de l'étang ou similaire.

2. Procédé selon la revendication 1, **caractérisé en ce que** la nourriture pour poissons est donnée en au moins 10 cycles, de préférence 60 cycles, répartis sur une journée.

3. Procédé selon la revendication 1 ou 2, **caractérisé en ce que** la nourriture pour poissons est donnée sous forme de granulés qui flottent.
